# FASCICULE DE BREVET EUROPEEN

(11) **EP 3 820 929 B1**
(45) Date de publication et mention de la délivrance du brevet: **04.12.2024**
(21) Numéro de dépôt: 19733045.9
(22) Date de dépôt: 27.06.2019
(51) Int. Cl.: C08G 79/02, C09K 9/02, G01K 11/20

(54) **POLYMERE DE COORDINATION D'UN PRECURSEUR A BASE D'IONS CU(I)**
KOORDINATIONSPOLYMER EINES VORLÄUFERS MIT CU(I)-IONEN
COORDINATION POLYMER OF A PRECURSOR CONTAINING CU(I) IONS

(30) Priorité: 12.07.2018 FR 1856449
(43) Date de publication de la demande: 19.05.2021
(73) Titulaire: Centre National de la Recherche Scientifique, 75016 Paris Cedex 16 (FR); Institut National des Sciences Appliquées de Rennes, 35700 Rennes (FR)
(72) Inventeur: LESCOP, Christophe, 35340 LIFFRE (FR)
(74) Mandataire: Vidon Brevets & Stratégie
(86) Numéro de dépôt international: PCT/EP2019/067265
(87) Numéro de publication internationale: WO 2020/011557

(56) Documents cités:
- WO-A1-2009/137709
- CN-A- 104 804 023
- CN-A- 105 295 062
- YESILEL O Z ET AL: "Coordination polymers of Mn(II) and Cu(II) orotate with 2-methylimidazole and N,N,N',N'-tetramethylethylenediamine ligands: Syntheses, spectroscopic and thermal analyses and crystal structures of mer-[Mn(@m-HOr)(H"2O)(2-meim)"2]"n and thermochromic {[Cu(@m-HOr)(tmen)].1.5H"2O}"n complexes", POLYHEDRON, PERGAMON PRESS, OXFORD, GB, vol. 28, no. 1, 14 January 2009 (2009-01-14), pages 150 - 156, XP025840207, ISSN: 0277-5387, [retrieved on 20081117], DOI: 10.1016/J.POLY.2008.09.024
- M. ELSAYED MOUSSA ET AL: "Facile synthesis of one-dimensional organometallic-organic hybrid polymers based on a diphosphorus complex and flexible bipyridyl linkers", CHEMICAL COMMUNICATIONS, vol. 52, no. 65, 1 January 2016 (2016-01-01), pages 10004 - 10007, XP055567553, ISSN: 1359-7345, DOI: 10.1039/C6CC05224J

## Description

### 1. Domaine de l'invention

L'invention concerne le domaine des contrôles non destructifs. Plus précisément l'invention concerne un composé thermochrome à base d'ions Cu(I) permettant de déterminer le vécu thermique d'un matériau, notamment de déterminer si ce dernier a été soumis à des conditions de températures dépassant au moins une température critique.

L'invention concerne également des procédés de fabrication de ces composés ainsi que des utilisations correspondantes.

### 2. Art antérieur

Les Contrôles Non Destructifs (CND) sont un ensemble de méthodes permettant d'évaluer l'état d'intégrité de structures ou de matériaux, sans les dégrader et à différents stades de leurs cycles de fonctionnement. Ils fournissent des informations sur l'état d'une pièce ou d'une structure, sans qu'il en résulte des altérations préjudiciables à leur utilisation ultérieure. Leur objectif est donc la mise en évidence de toutes les défectuosités susceptibles d'altérer la disponibilité, la sécurité d'emploi et/ou la conformité d'un produit et de son vécu à l'usage auquel il est destiné. C'est pourquoi le recours aux CND est un élément majeur du contrôle de la qualité des produits et de la gestion des risques, assurant ainsi la sécurité des personnes et des biens.

L'utilisation croissante de matériaux composites dans des pièces mécaniques rend les CND de suivi thermique indispensables. En effet, les matériaux composites présentent généralement des températures de dégradation ou d'altération bien plus basses que celles des matériaux métalliques traditionnels ainsi que des processus de vieillissement notablement différents, notamment associés aux variations de températures. Il est donc nécessaire de s'assurer pour un matériau composite pouvant être soumis à des variations de températures que ce dernier n'a pas été soumis au cours de sa vie à des températures trop élevées.

Cependant, il est parfois très compliqué de mettre en oeuvre un CND de suivi thermique pour des pièces mécaniques qui sont soumises à des variations de températures en régime de fonctionnement. Il est donc nécessaire de disposer de traceurs pouvant être placés sur des pièces mécaniques en fonctionnement permettant d'enregistrer dans le temps le vécu thermique de ces pièces, et notamment si ces pièces ont été soumises à des températures trop élevées.

Des complexes de l'ion Cu(I) ont été décrits comme étant hautement émissifs à l'état solide sous excitation UV. Ils présentent des performances très prometteuses dans la perspective du développement de nouveaux matériaux moléculaires luminescents hautement émissifs. L'utilisation du cuivre est particulièrement avantageuse en ce que ce métal est relativement abondant dans la croûte terrestre, puisqu'il est le vingt-cinquième élément le plus présent en abondance. Il est notamment beaucoup plus abondant que les métaux généralement utilisés dans la préparation de matériaux luminescents multifonctionnels pour l'éclairage, l'affichage, ou encore la détection. L'utilisation de cuivre dans des matériaux luminescents ouvre donc de larges perspectives d'applications à coûts modérés et grande échelle pour les dispositifs potentiellement développés à partir de tels matériaux (voir Coordination polymers of Mn(II) and Cu(II) orotate with 2-methylimidazole and N,N,N',N'-tetramethylethylenediamine ligands: Synthèses, spectroscopie and thermal analyses and crystal structures of mer-[Mn(mu-HOr)(H2O)(2-meim)2]n and thermochromic {[Cu(mu-HOr)(tmen)].1.5H2O}n complexes , POLYHEDRON, vol. 28, no. 1, 14 janvier 2009, pages 150-156).

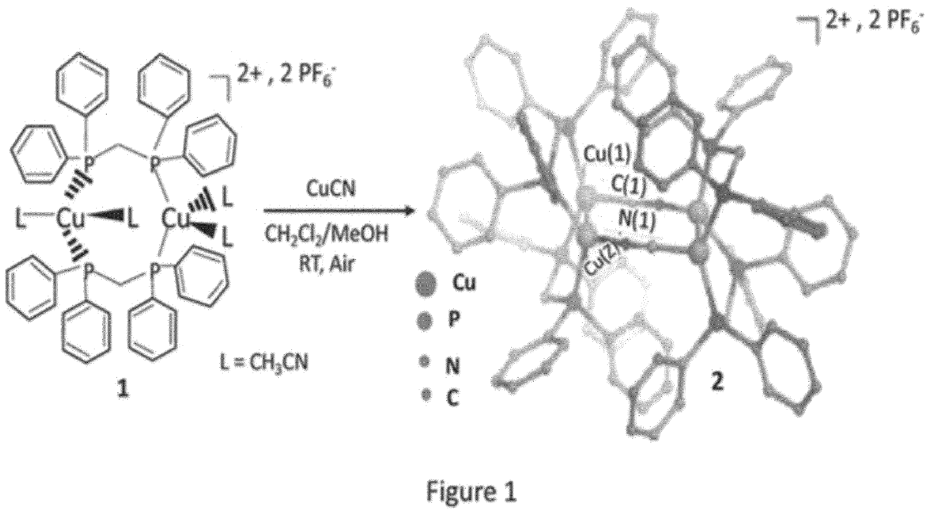

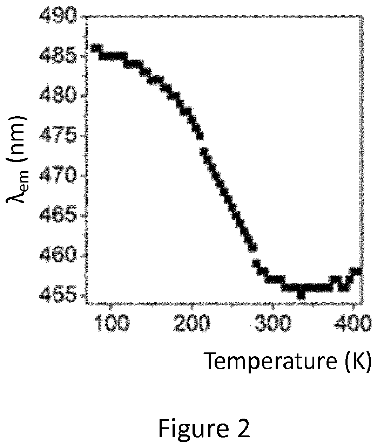

Certains des complexes de l'ion Cu(I) ont par ailleurs la particularité d'être thermochromes, c'est à dire que leur longueur d'onde en émission varie en fonction de la température. C'est le cas notamment du composé 2, représenté en Figure 1, dont les caractéristiques spectroscopiques en fonction de la température ont été notamment décrites par Elsayed Moussa & al. (2016). Solid State Highly Emissive Cu(I) Metallacycle: Promotion of Cuprophilic Interactions at the Excited States ; Chem. Commun. ; 52. Le composé 2 est un métallacycle à quatre ions Cu(I) obtenu par la réaction d'un équivalent du composé 1 avec CuCN. Le composé 2 sous irradiation UV (à 320 nm) émet à 298 K une lumière intense perçue comme étant bleue par les yeux humains et caractérisée dans son spectre d'émission par une bande large et non structurée, centrée à λₑₘ= 457 nm. Un rendement quantique d'émission de 72 % à 298 K est associé avec cette luminescence à l'état solide. Le composé 2 présente de plus une propriété de thermochromisme en émission avec un décalage net vers le rouge de son spectre d'émission caractérisé par l'émission d'une lumière intense perçue comme étant verte par les yeux humains par un spectre dont la bande est centrée à λₑₘ= 486 nm sous irradiation UV (à 320 nm) à 80 K. Le graphique de la Figure 2 détaille la variation de λₑₘ en fonction de différentes températures appliquées.

Cependant, la propriété de thermochromisme du composé **2**, est réversible. En conséquence, l'étude des propriétés spectroscopiques du composé **2** permettent le suivi de la température instantanée du milieu dans lequel il est placé, mais ne permettent pas d'établir le suivi de son vécu thermique. L'étude des propriétés spectroscopiques du composé **2** ne permettent notamment pas de déterminer si le milieu dans lequel il a été placé a dépassé à un moment donné au moins une température critique. Ainsi, un complexe de l'ion Cu(I) thermochrome, comme le composé **2,** en tant que tel, ne permet pas d'envisager *a priori* d'utilisation en tant que CND de suivi thermique.

### 3. Objectifs de l'invention

La présente invention a pour objectif de proposer un composé thermochrome à base d'ions Cu(I) permettant de déterminer si au moins une température critique du milieu dans lequel il est placé a été dépassée au cours du temps.

L'invention a également comme objectif, au moins selon certains modes de réalisation, de proposer un composé à base d'ions Cu(I) dont l'émission en-dessous de la température critique et/ou au-dessus de la température critique a lieu dans le domaine visible.

L'invention a également comme objectif, au moins selon certains modes de réalisation, de proposer des composés à base d'ions Cu(I), simples à produire et bon marché.

La présente invention a également comme objectifs de proposer des procédés de fabrication et des utilisations correspondants.

### 4. Exposé de l'invention

Selon un premier aspect, l'invention concerne un polymère de coordination d'un précurseur à base d'ions Cu(I) avec un ligand connecteur polytopique.

Le précurseur est un complexe luminescent comprenant au moins deux ions Cu(I), les deux ions Cu(I) du précurseur étant reliés entre eux par au moins un ligand assembleur.

Le ligand connecteur possède au moins deux groupements terminaux choisis indépendamment parmi un groupe aromatique azoté et un groupe carbonitrile.

Le polymère de coordination présente au moins une transition thermochrome irréversible de sa luminescence lorsqu'il est soumis à une température dépassant une température critique T_{c}.

Au sens de la présente invention, on entend par « polymère de coordination » un polymère comprenant des cations métalliques reliés entre eux par des ligands. Le polymère de coordination de la présente invention est formé par des précurseurs à base d'ions Cu(I) reliés entre eux par des ligands connecteurs polytopiques.

On entend par « Cu(I) », un atome de cuivre ayant un nombre d'oxydation :+I.

On entend par « polytopique » la capacité que présente un même ligand de pouvoir se lier à au moins deux atomes différents ; dans le cas d'espèce, il s'agit de pouvoir se lier à deux ions Cu(I) différents.

On entend par « luminescent », la capacité qu'a un composé d'émettre de la lumière à partir d'énergie fournie sous forme électrique, chimique, mécanique ou lumineuse.

On entend par « thermochrome », la capacité qu'a un composé de changer de propriété spectroscopique en fonction de la température.

On entend par « un » précurseur à base d'ions Cu(I) et « un » ligand connecteur polytopique, « au moins un » précurseur à base d'ions Cu(I) et « au moins un » ligand connecteur polytopique. En effet, le polymère de coordination peut éventuellement être formé par un mélange de précurseurs à base d'ions Cu(I) de différents type et/ou d'un mélange de ligands connecteurs polytopiques de différents types.

Ainsi, les inventeurs de la présente invention ont synthétisé un nouveau type de polymère de coordination comprenant un précurseur à base d'ions Cu(I) luminescent et un ligand connecteur polytopique. Ils ont mis en évidence que ce polymère de coordination présente une transition thermochrome irréversible lorsqu'il est soumis à une température dépassant une température critique T_{c}. Les inventeurs ont considéré que cette transition thermochrome irréversible résulte d'une ré-organisation structurale sans décomposition à l'état solide se réalisant de manière concertée à une température supérieure ou égale à la température critique T_{c}. Plus précisément, ils ont postulé et démontré en partie, qu'il y a une décoordination irréversible des ligands connecteurs. La rupture de liaison entre les précurseurs et les ligands connecteurs a lieu au delà de la température critique T_{c}, c'est à dire qu'elle est thermiquement activée. Elle induit en outre une modification structurale des précurseurs à base d'ions Cu(I) qui modifie leur structure électronique et leurs propriétés de luminescence.

Le ligand connecteur du polymère de coordination est lié à au moins deux ions Cu(I) de précurseurs différents. Pour un précurseur donné, le choix du ligand connecteur permet d'ajuster la valeur de la température critique T_{c}.

Le ligand connecteur est polytopique. En particulier, il peut être ditopique ou tritopique.

Le ligand connecteur possède au moins deux groupements terminaux choisis indépendamment parmi un groupe aromatique azoté et un groupe carbonitrile. En particulier, lesdits au moins deux groupements terminaux peuvent être choisis indépendamment parmi : 4-pyridil, 3-pyridyl, imidazoyle, pyrimidyl, thioazolyl, nitrile, 4-benzonitrile et 3-benzonitrile.

Selon des modes de réalisation avantageux, le ligand connecteur peut être choisi parmi les composés suivants, dans lesquels Coord₁ et Coord₂ sont lesdits au moins deux groupements terminaux du ligand connecteur, de formule: 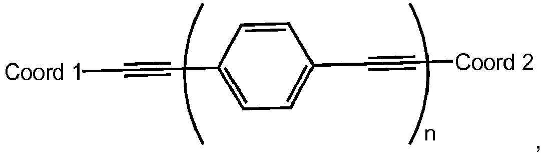 dans laquelle n est un entier allant de 0 à 2 ; 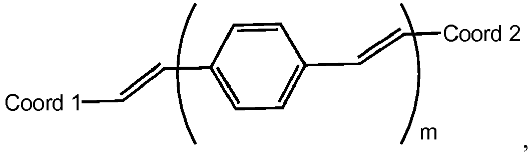 dans laquelle m est un entier allant de 0 à 3 ; 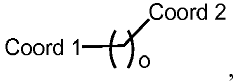 dans laquelle o est un entier allant de 0 à 12 ; 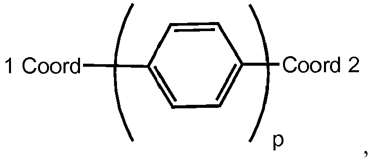 dans laquelle p est un entier allant de 1 à 3 ; 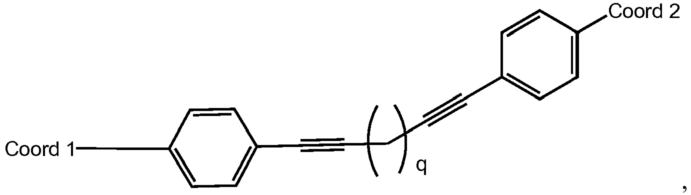 dans laquelle q est une entier allant de 0 à 6 ; et,

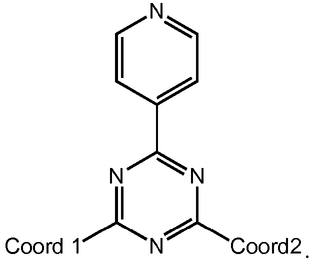

Les au moins deux groupements terminaux du ligand connecteur peuvent notamment être du 4-pyridil. Le ligand connecteur est alors choisi préférentiellement parmi les composés suivants, de formule : 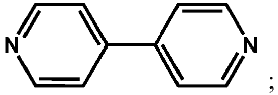 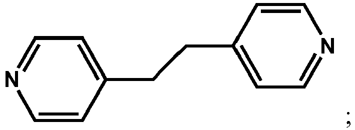 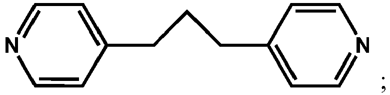 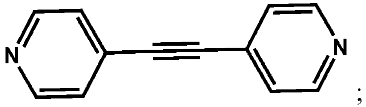 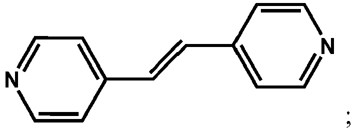 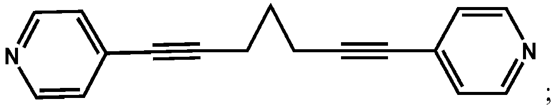 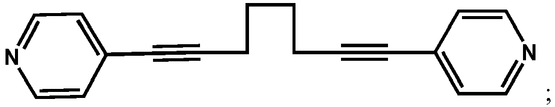 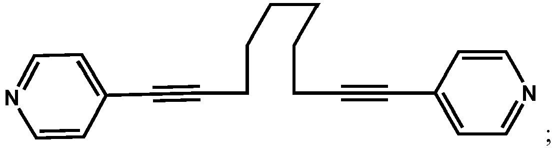 et,

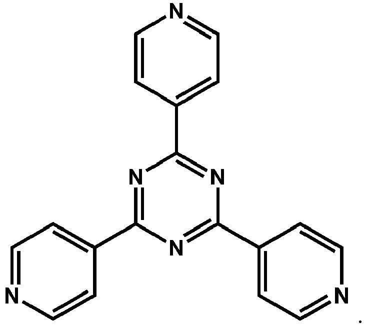

Alternativement, les au moins deux groupements terminaux du ligand connecteur peuvent notamment être du 4-benzonitrile. Le ligand assembleur est alors choisi préférentiellement parmi les composés suivants, de formule: 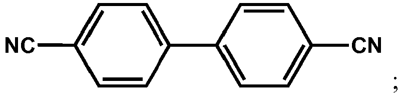 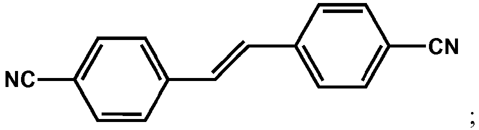 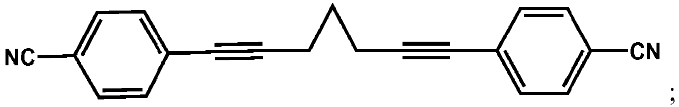 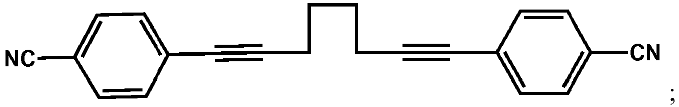 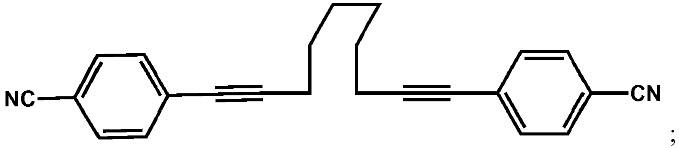 et,

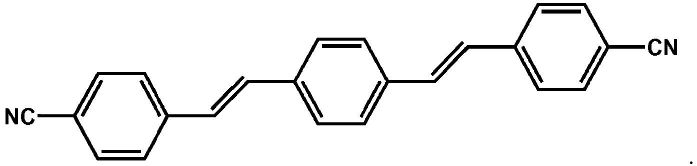

Le précurseur comprend au moins deux ions Cu(I) reliés entre eux par au moins un ligand assembleur et est luminescent. Il est notamment luminescent au sein du polymère de coordination si la température est restée au cours du temps strictement inférieure à la température critique T_{c} et/ou si la température a dépassé à un moment donné la température critique T_{c}.

Le précurseur au sein du polymère de coordination est thermochrome et émet à différentes longueurs d'onde selon que la température est restée au cours du temps strictement inférieure à la température de transition T_{c} ou alternativement a dépassé à un moment donné la température critique T_{c}. Il est à noter que le précurseur en tant que tel, ou précurseur « libre », peut être thermochrome ou, alternativement non thermochrome.

Ainsi, pour un ligand connecteur donné, le choix du précurseur permet d'ajuster les propriétés de luminescence du polymère de coordination pour une température restée strictement inférieure au cours du temps à la température critique T_{c} et pour une température ayant dépassé à un moment donné la température critique T_{c}.

Le précurseur peut notamment être luminescent sous irradiation lumineuse. En particulier, le précurseur peut être luminescent sous une irradiation de type UV-visible, c'est à dire à une longueur d'onde comprise entre 100 nm et 380nm. Avantageusement, le précurseur au sein du polymère de coordination émet par luminescence dans le domaine du visible à une température qui est restée au cours du temps strictement inférieure à la température critique T_{c} et/ou à une température qui a dépassé à un moment donné la température critique T_{c}.

Le précurseur peut notamment comprendre de 2 à 12 ions Cu(I). Préférentiellement, le précurseur comprend de 2 à 8 ions Cu(I). De manière davantage préférée, le précurseur comprend de 2 à 4 ions Cu(I).

Selon des modes de réalisation particuliers, le précurseur peut être un métallacycle d'ions Cu(I) tétramétallique, de formule : 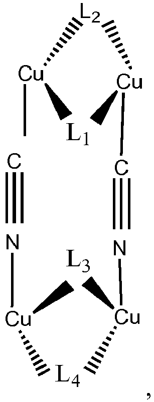 dans laquelle L₁, L₂, L₃ et L₄ sont ledit au moins un ligand assembleur.

Formellement, ce métallacycle est constitué de deux complexes bi-nucléaires de Cu(I) dont les ions Cu(I) sont reliés entre eux par les ligands assembleurs L₁ et L₂ pour le premier complexe bi-nucléaire et par les ligands assembleurs L₃ et L₄ pour le second complexe bi-nucléaire, les deux complexes bi-nucléaires étant reliés entre eux par deux ponts cyano.

Le ligand assembleur permet de relier entre eux lesdits au moins deux ions Cu(I) du précurseur de telle sorte à ce que les ions Cu(I) soient suffisamment proches l'un de l'autre. Ceci permet que, lorsque la température dépasse la température critique T_{c}, c'est à dire lorsque les ligands connecteurs du polymère de coordination se décoordinent des précurseurs de manière irréversible, les ions Cu(I) du précurseur modifient leur structure électronique et donc leur propriété de luminescence. Avantageusement, les au moins deux ions Cu(I) du précurseur sont distants l'un de l'autre de 2,4 à 4Â.

Le ligand assembleur permet également de stabiliser le nombre d'oxydation des atomes de cuivre à +I, notamment pour des températures élevées, comme par exemples les températures supérieures à la température critique T_{c}.

Le ligand assembleur peut comprendre au moins deux groupements choisis indépendamment parmi un atome de carbone carbénique et un groupe organophosphoré.

Selon des modes de réalisation avantageux, le ligand assembleur peut notamment comprendre au moins deux groupes diphenylphosphino.

Le ligand assembleur peut en particulier être choisi parmi les composés de formule : 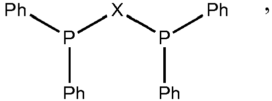 dans laquelle X est : CH₂, (CH₂)₂ ou NH ; 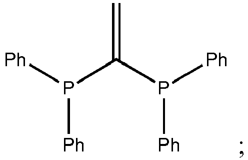 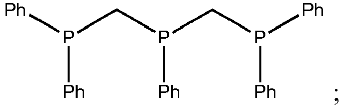 et,

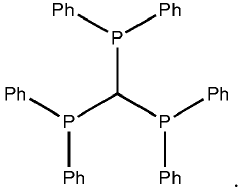

Dans les polymères de coordination selon l'invention, la température critique peut notamment être d'au moins 100°C. La température critique T_{c} doit nécessairement être inférieure à la température de dégradation du précurseur. En particulier, la température critique T_{c} peut être comprise entre 120°C et 200°C, notamment entre 170°C et 190°C.

Selon un deuxième aspect, l'invention concerne l'utilisation d'un polymère de coordination selon l'invention pour contrôler que la température d'un milieu ne dépasse pas la température critique T_{c} du polymère de coordination au cours du temps.

Selon un troisième aspect, l'invention concerne un procédé de fabrication du polymère de coordination selon l'invention. Selon ce procédé, le précurseur et le ligand connecteur sont mis à réagir à une température strictement inférieure à la température critique T_{c} pour former des cristaux dudit polymère de coordination.

### 5. Liste des figures

La Figure 1 représente la réaction de synthèse du composé 2 à partir d'un composé 1 issu de Elsayed Moussa & al. (2016).
La Figure 2 représente la longueur d'onde, exprimée en nanomètres (nm), du maximum d'émission, noté λₑₘ, du composé 2 sous irradiation UV (320 nm) en fonction de la température, exprimée en Kelvins (K).
La Figure 3 représente un schéma de la réaction du composé 2 avec trois types de ligands connecteurs 10a, 10b et 10c pour former trois types de polymères de coordination 100a, 100b et 100c.
La Figure 4 représente les spectres d'émission des composés 2, 100a, 100b et 100c sous irradiation UV à température ambiante (25°C).
La Figure 5 représente : a) (en haut) les courbes ATG-DSC du composé 100a par chauffage de 25 à 1000°C à régime variable ; b) (en bas) les courbes ATG-DSC après correction par chauffage de 25 à 300°C à 5°C/min.
La Figure 6 représente : a) (en haut) les courbes ATG-DSC du composé 100b par chauffage de 25 à 1000°C à régime variable ; b) (en bas) les courbes ATG-DSC après correction par chauffage de 25 à 300°C à 5°C/min.
La Figure 7 a) (en haut) les courbes ATG-DSC du composé 100c par chauffage de 25 à 1000°C à régime variable ; b) (en bas) les courbes ATG-DSC après correction par chauffage de 25 à 300°C à 5°C/min.
La Figure 8 représente schématiquement la réorganisation structurale des polymères de coordination 100a, 100b, 100c se réalisant de manière concertée et sans décomposition à l'état solide pour former au delà d'une température critique les composés 100a', 100b' et 100c'.
La Figure 9A représente une photographie des composés 100a, 100c, 100d à 100h sous lumière visible (partie de gauche) et sous irradiation UV à 320 nm (partie de droite) avant transition thermochrome irréversible et non destructrice.
La Figure 9B représente une photographie des composés décrits après transition thermochrome irréversible et non destructrice à 220°C, sous lumière visible (partie de gauche) et sous irradiation UV à 320 nm (partie de droite).

### 6. Description détaillée de modes de réalisation

### 6.1 - Synthèse et caractérisation d'un précurseur à base de quatre ions Cu(I)

En référence à la Figure 1, un précurseur à base de quatre ions Cu(I), le composé 2, a été préparé à partir d'un complexe bimétallique, le composé 1.

Le composé 1 a été préparé comme suit :
Le composé 1 est préparé in-situ par la réaction à température ambiante et sous air d'un équivalent de [Cu(CH₃CN)₄]PF₆ et d'un équivalent de dppm dissouts dans le CH₂Cl₂. « dppm » est le ligand : 1,1-Bis(diphénylphosphino)méthane. Il joue ici le rôle de ligand assembleur.

La réaction d'un équivalent du composé 1 avec un équivalent de CuCN à température ambiante dans l'air dans un mélange 2 :1 CH₂Cl₂/MeOH conduit à la formation d'une solution incolore.

La diffusion de vapeurs de pentane dans la solution incolore permet d'obtenir des cristaux homogènes, stables dans l'air, du composé 2. Le composé 2 est obtenu avec un rendement de 56%.

La structure moléculaire du composé 2 a été déterminée par diffraction des rayons X sur monocristaux, les centres métalliques Cu(I) présentent une sphère de coordination trigonale plan distordue. Celle-ci peut-être étendue à une sphère de coordination tétragonale, qui est fréquemment rencontrée dans les complexes de coordination des ions Cu(I), via la coordination d'un ligand donneur supplémentaire, donnant un accès potentiel à de nouveaux assemblages supramoléculaires du Cu(I) ayant potentiellement des propriétés de luminescence modulées.

### 6.2 - Synthèse et caractérisation de polymères de coordination 100a, 100b et 100c à partir du composé 2

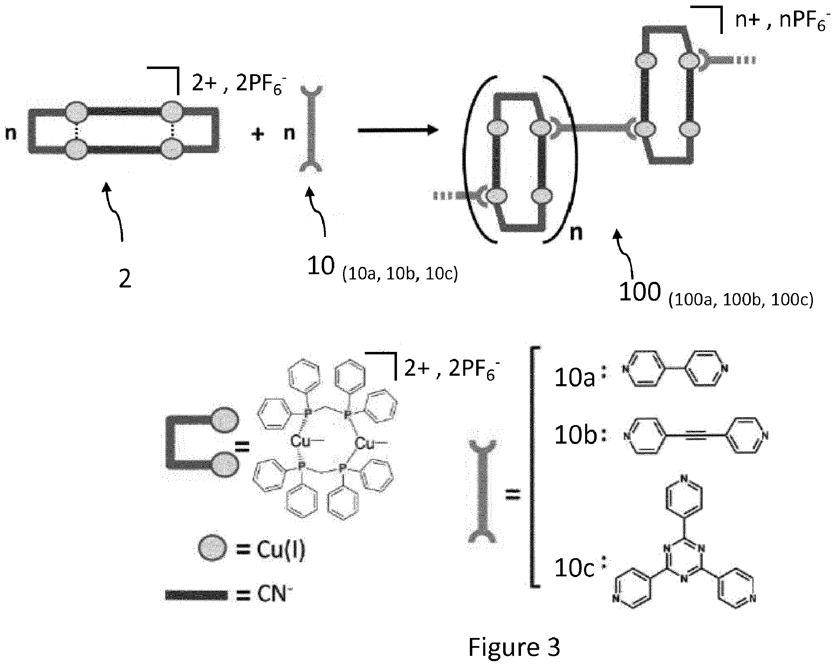

En référence à la Figure 3, un équivalent du composé 2 (précurseur), dissout dans le CH₂Cl₂ est mis en réaction à température ambiante avec un équivalent de ligand connecteur 10 dissout également dans le CH₂Cl₂, ce qui conduit à des solutions mères limpides incolores.

Trois ligands connecteur ont été testés : un ligand 4,4'-bipyridine,10a, un ligand bis(4-pyridyl)acetylene, 10b et, un ligand 2,4,6-tri(4-pyridyl)-1,3,5-triazine, 10c.

Un polymère de coordination unidimensionnel, 100, est alors recueilli sous la forme de monocristaux incolores. Plus précisément, un polymère de coordination 100a et un polymère de coordination 100b sont recueillis suite à la diffusion à température ambiante de vapeurs de pentane pendant une semaine dans ces solutions mères, pour respectivement le ligands 4,4'-bipyridine,10a et, le ligand bis(4-pyridyl)acétylène, 10b. Concernant le ligand 2,4,6-tri(4-pyridyl)-1,3,5-triazine, 10c, un polymère de coordination unidimensionnel,100c , est obtenu sous forme de cristaux incolores après 3 jours suite à sa simple cristallisation spontanée dans la solution mère à température ambiante.

Les composés 100a, 100b et 100c sont alors récupérés, après lavages au pentane et séchage, sous la forme de poudres polycristallines de couleur jaune pâle avec des rendements respectifs de 64 %, 49 % et 65 %.

Le composé 2 (précurseur) présente en particulier dans son spectre infrarouge (IR) une vibration ν_{CN}) à 2117 cm⁻¹ qui est caractéristique de la présence du fragment cyano au sein du métallacyle. De la même manière, le spectre infrarouge des composés 100a, 100b et 100c (polymères de coordination) présente une seule vibration associée à ν_{CN}) observées à 2119, 2100 et 2070 cm⁻¹ respectivement. L'allure générale du spectre IR est donc maintenue, ce qui suggère que la structure globale du composé 2 est conservée dans les composés 100a, 100b et 100c, avec en particulier un seul type de ligand cyano dans une structure moléculaire ayant une symétrie comparable à celle du composé 2.

La structure moléculaire des composés 100a, 100b et 100c a pu être déterminée à partir de la diffraction des rayons X sur des monocristaux, révélant la formation de polymères de coordination 1D alternant précurseur et ligand connecteur dans un rapport 1:1. Les composés 100a et 100b, cristallisent dans le groupe d'espace P-1 du système triclinique tandis que le composé 100c cristallise dans le groupe d'espace C2/c du système monoclinique.

Dans les composés 100a, 100b et 100c, l'unité de répétition est basée sur un fragment bimétallique Cu₂(µ₂-dppm)₂, un ligand cyano et la moitié d'un ligand connecteur ditopique (le ligand 10c jouant le rôle de connecteur ditopique dans la structure du composé 100c, laissant son troisième fragment 4-pyridyl libre de toute coordination) ainsi que d'un contre-anion PF6⁻ et de, respectivement, quatre, deux et trois molécules de CH₂Cl₂. La structure étendue est formée en connectant ces unités de répétition de telle sorte que se forme un polymère unidimensionnel connectant des métallacycles tétramétalliques [Cu₄(µ₂-dppm)₄CN₂]²⁺ par des ligands connecteurs ditopiques.

Dans les composés 100a, 100b et 100c, deux ions Cu(I) (Cu(1) et Cu(2) ; voir Figure 1) indépendants sont liés à deux atomes de phosphore de chacun des deux ligands assembleurs dppm, qui forment des chélates 1κ*P*:2κ*P* analogues à ceux observés dans le composé 2. Chaque Cu(I) est de plus lié au ligand cyano qui ponte chaque dimère de sorte que sont présents dans ces édifices des fragments métallacycle Cu₄CN₂ analogues à celui observé dans la structure du composé 2. Ces métallacycles conservent une forme de parallélogramme. Il n'est pas possible de déterminer la position relative des atomes de carbone et d'azote des ligands cyano grâce à la détermination structurale par diffraction des rayons X sur monocristaux. Néanmoins, dans le cas du composé 2, il a été possible de réaliser une corrélation fine entre les configurations moléculaires possibles, les propriétés photophysiques mesurées et les résultats des calculs de TD-DFT menés permettant de positionner l'atome d'azote du ligand cyano coordiné au centre métallique Cu(1) positionné sur le sommet « obtu » du métallacycle. Dans le cadre de la description des structures moléculaires des composés 100a, 100b et 100c, cette configuration est conservée. Finalement, la sphère de coordination des centres métalliques Cu(2) est complétée par un lien avec l'atome d'azote des fragments 4-pyridyl des ligands connecteurs ditopiques, de telle sorte que les centres métalliques Cu(2) présentent une sphère de coordination tétraédrique tandis que celles des ions Cu(1) demeurent trigonale distordues tel qu'observé dans le composé 2.

Au sein des fragments bimétalliques Cu₂(dppm)₂ des composés 100a, 100b et 100c, la distance intermétallique est, respectivement, de 3.314(4) Å, 3.210(3) Å et 3.199(5) Å, contre une distance intermétallique de 2.866(4) Å pour le composé 2. La distance intermétallique est donc notablement augmentée ce qui est lié à une réorganisation intramoléculaire se réalisant au sein des fragments Cu₂(dppm)₂. Celle-ci est conséquence de l'accroissement de la sphère de coordination d'un des centres métalliques qui passe de trigonal plan à tétraédrique du fait de la coordination des fragments 4-pyridyl des ligands connecteurs ditopiques. On peut noter qu'un tel accroissement de cette distance intermétallique va induire un affaiblissement très marqué de l'interaction métallophile observée dans le composé 2. Comparativement au composé 2, les métallacycles Cu₄CN₂ formés dans les composés 100a, 100b, et 100c présentent une géométrie plus 'écrasée' qui est caractérisée par un « angle obtu » Cu1-Cu2-Cu1' plus grand (100a : 127.1°, 100b : 125.8°, 100c : 124.3° et pour le composé 2 : 122.7°), un « angle aigu » Cu2-Cu1-Cu2' plus petit (100a : 52.9°, 100b : 54.2°, 100c : 55.7° alors que pour le composé 2 : 57.3°) tandis que la distance intermétallique entre chaque dimère de Cu(I) au sein des métallacycles Cu₄CN₂ est légèrement augmentée (100a : 5.09 Å, 100b : 5.06 Å, 100c : 5.07 Å et pour le composé 2 : 5.01 Å). La distance entre deux ions Cu(I) de deux métallacycles voisins (séparés par les ligands connecteurs ditopiques 10a, 10b et 10c) dans les composés 100a, 100b et 100c est, respectivement, de 11.409 Å, 13.76 Å et 13.30 Å. Finalement les polymères de coordination 100a et 100b sont globalement linéaires et sont orientés de manière parallèle dans le cristal sans partager d'interactions particulières. A l'opposé, les polymères de coordination 100c se propagent plutôt en zigzag dans des directions parallèles. En son sein, deux métallacycles consécutifs, par rapport au ligand connecteur 10c auquel ils sont coordinés se trouvent orientés du même côté. Il résulte d'un tel arrangement des interactions de type π-CH entre les cycles phényles de deux métallacycles voisins.

### 6.3 - Etude des propriétés de luminescence à l'état solide des composés 100a, 100b et 100c

D'une manière générale, les composés 100 a, 100b et 100c à l'état solide sous irradiation UV émettent une lumière perçue comme étant jaune ou jaune-orange, qui est notoirement différente de la lumière bleue issue du composé 2 (précurseur).

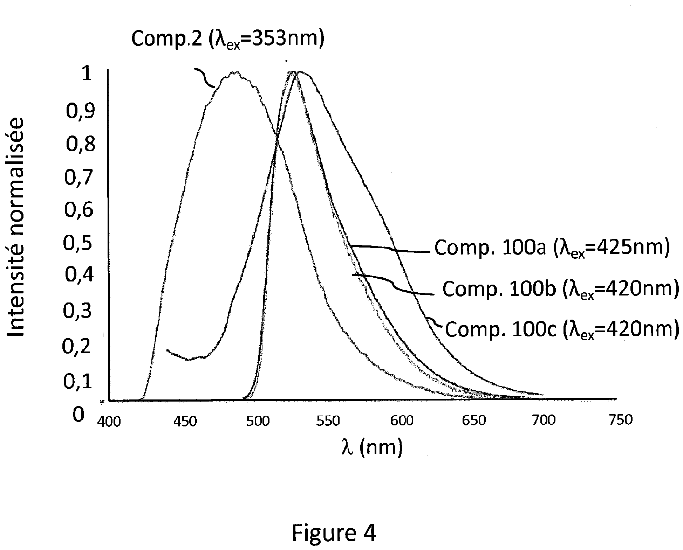

Ces propriétés de luminescence ont été étudiées par la mesure à l'état solide et à température ambiante des spectres d'émission de ces composés présentés en Figure 4.

Ces propriétés sont associées à des spectres d'émissions présentant des bandes très larges et non structurées ayant des maxima d'intensité mesurés à 527nm, 525nm et 533nm respectivement pour les composes 100a, 100b et 100c. Pour le compose 100c, un épaulement est également observé à 600nm. Les rendements quantiques d'émission à l'état solide à température ambiante sont de 19%, 12% et 15% ( λex = 330, 330 et 417 nm) respectivement pour les composes 100a, 100b et 100c. Ils sont inférieurs à celui du composé 2 (72%, λex = 320 nm pour un maximum d'intensité mesuré à 457 nm à température ambiante) mais restent corrects car ces composés absorbent dans le spectre visible et présentent des maximums d'intensité de leurs spectres d'émission à des énergies plus faibles (λmax = 457nm pour le compose 2).

Le déplacement notable des spectres d'émission des dérivés 100a, 100b et 100c vers le rouge, comparativement à celui du composé 2 (Δλₘₐₓ, ca. 70 nm) peut être a priori associé à la coordination des ligands polypyridine (10a, 10b et 10c) dans la sphère de coordination des centres métalliques. A la vue des structures moléculaires des états fondamentaux déterminées pour les composés 100a, 100b et 100c, cette coordination peut induire des effets antagonistes du point de vue des performances de photoluminescence de ces composés. En effet, on peut anticiper que la structure électronique associée au fragment de répétition de ces polymères soit notablement modifiée comparativement à ce qui est observé dans le cas du composé A. D'une part, l'augmentation de la distance intermétallique dans l'état fondamental peut suggérer que la réorganisation moléculaire dans les états excités de ces polymères n'implique pas un renforcement notable des interactions métallophiles, et par là, du couplage spin-orbite permettant de faciliter les phénomènes de relaxations radiatives très efficaces au sein de ce type d'édifices. D'une part, il est anticipé que l'introduction des ligands pyridyl dans la sphère de coordination des centres métalliques implique un abaissement des niveaux énergétiques de type LUMO dans ces polymères par rapport au composé 2, ce qui explique le déplacement vers le rouge des spectres d'émission.

### 6.4 - Thermochromisme irréversible en émission à haute température

Les composés 100a, 100b et 100c présentent une transition thermochrome irréversible lorsqu'ils sont portés à haute température.

Afin de développer de nouveaux matériaux moléculaires luminescents performants pour des applications, en éclairage, il est important que ceux-ci soient stables à des températures supérieures à celles de la température ambiante.

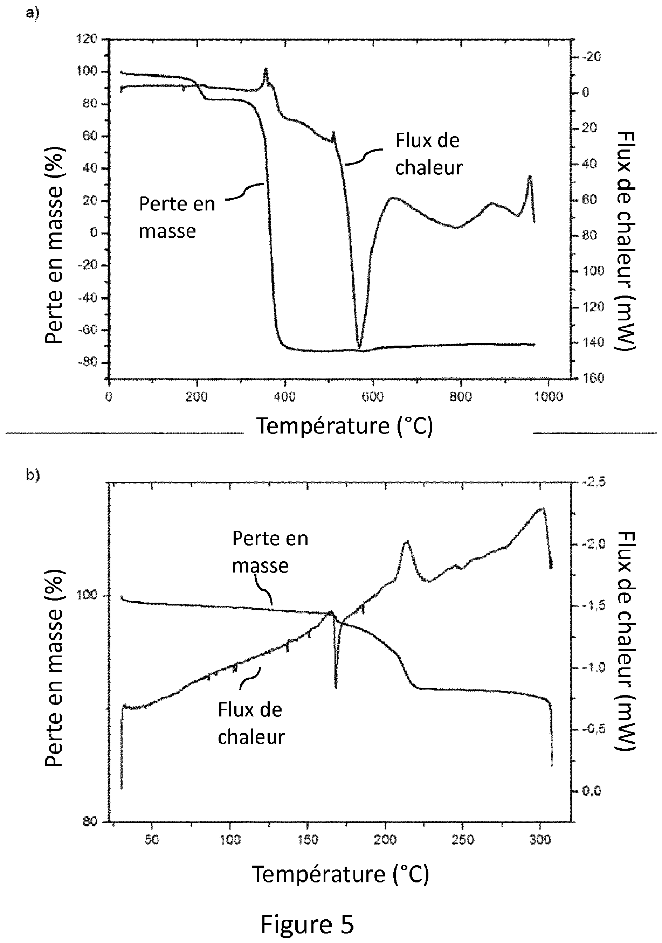

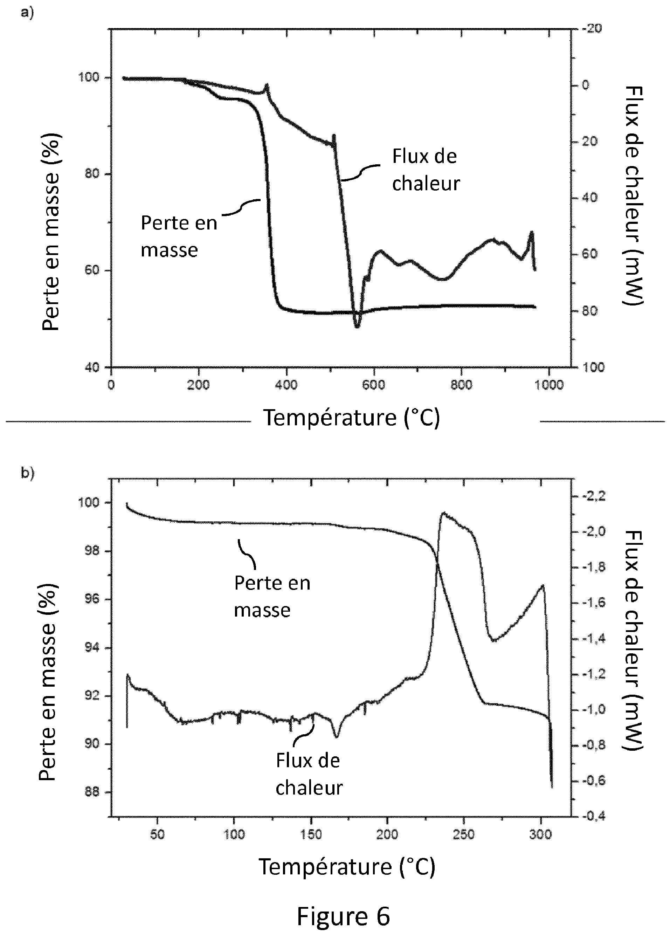

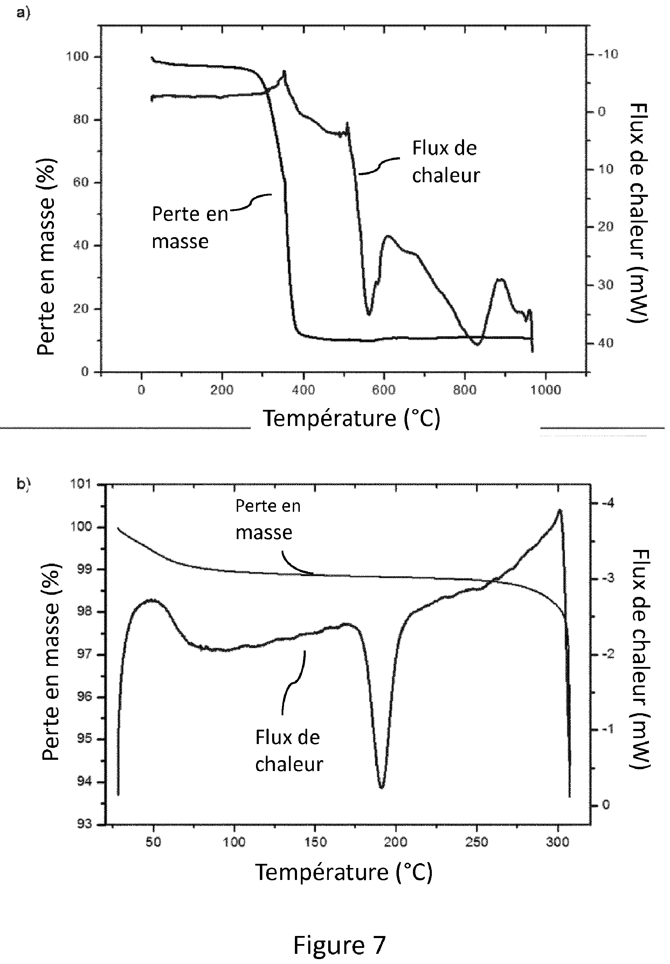

Afin de caractériser cela, des mesures ATG-DSC ont été réalisées pour les composés 100a, 100b et 100c sur la base des poudres polycristallines obtenues après collecte et séchage des cristaux obtenus en solution. Celles-ci révèlent (voir figures 5-7) que ces composés sont thermiquement stables jusqu'à 200°C (composé 100a), 212°C (composé 100b) et 300°C(composé 100c). Lorsque la température continue d'être augmentée le composé 100a et le composé 100b présentent des pertes de masses modérées puis un palier jusqu'à 350 °C, puis se décomposent au-delà tandis que le composé 100c commence à se décomposer, sans palier, avec perte de masse continue et importante au-delà de 300 °C.

Il est très intéressant de souligner qu'en outre, les courbes de DSC de ces trois composés présentent un pic endothermique d'intensité modérée à respectivement 175°C, 170°C et 190°C, pic qui n'est pas accompagné de perte de masse notable.

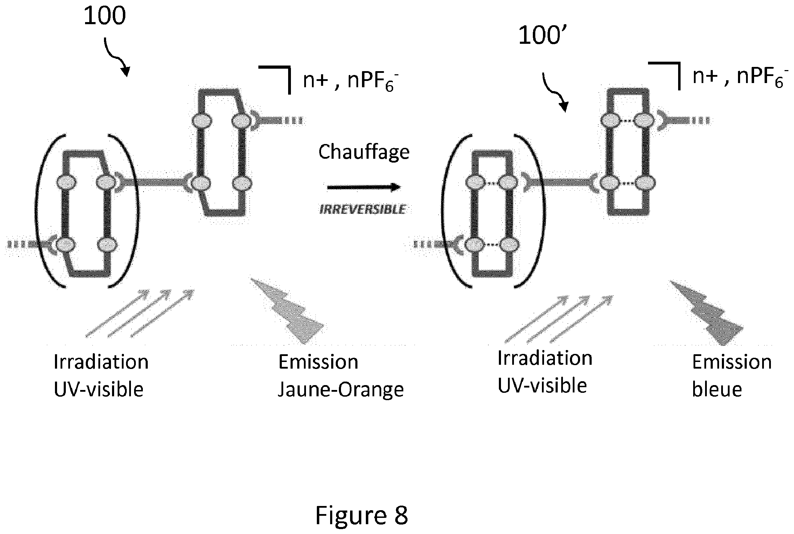

Ce pic correspond donc à une absorption de chaleur par ces solides à une température critique T_{c}, absorption qui est attribuée à une ré-organisation structurale se réalisant de manière concertée et sans décomposition à l'état solide. De plus, il est observé que lorsque des échantillons massifs solides des composés 100a, 100b et 100c sont soumis sous air à des températures de l'ordre de 200 °C, la couleur de ces dérivés évolue de façon irréversible du jaune vers le blanc sans qu'aucune modification morphologique notable ne se réalise, fournissant les polymères de coordination notés 100' (100a', 100b' et 100c') (voir Figure 8). De retour à température ambiante, ces dérivés 100a', 100b' et 100c' conservent cette coloration blanche tandis que lorsque soumis à une irradiation UV ils émettent une lumière perçue comme étant bleue qui est notoirement différente de la lumière jaune à jaune-orange observée pour les composé 100a, 100b et 100c avant chauffage. Par contre, la lumière émise présente une coloration perçue par l'oeil très similaire à celle observée pour le composé 2 à l'état solide.

En référence à la Figure 8, ces observations suggèrent qu'une décoordination à l'état solide des ligands polypyridine connecteurs se réalise à haute température permettant d'accéder à de nouveaux composés moléculaires solides au sein desquels des métallacycles du composé 2 sont séparés par des ligands polypyridine non coordinés. Cette hypothèse est confirmée par la mesure des spectres IR des composés 100a', 100b' et 100c' qui montrent que la vibration ν_{(CN)} observée passe à 2120 cm⁻¹ alors que l'allure globale du spectre IR reste par ailleurs inchangée entre les composés 100a, 100b et 100c par rapport à 100a', 100b' et 100c'. Il faut noter qu'une telle vibration ν_{(CN)} est très proche de celle mesurée pour le composé 2 et suggère ainsi que ce métallacycle se reforme après le chauffage dans un solide moléculaire ou sont conservées les bandes IR caractéristiques des ligands connecteurs. Ainsi, la transition structurale observée par DSC correspondrait à une décoordination activée thermiquement des ligands connecteurs polypyridine au sein du solide moléculaire, décoordination irréversible impactant de manière significative les propriétés photophysiques de ces dérivés passant de l'émission d'une lumière perçue comme jaune-orange à une lumière perçue comme bleu sous excitation UV.

### 6.5 - Complément de résultats : Synthèse et caractérisation de nouveaux polymères de coordination 100d, 100e, 100f, 100g, 100h, 100i et 100j à partir du composé 2

En référence à la Figure 3 et de manière similaire à ce qui a été mis en oeuvre pour les préparation et les études des composés 100a, 100b et 100c, de nouveaux dérivés polymères de coordination 100d, 100e, 100f, 100g, 100h, 100i et 100j ont été obtenus sous forme de monocristaux à partir de la réaction du précurseur 2 avec les ligands connecteurs : 10d 3,3'-bipyridine, 10e bis(4-pyridil)ethane, 10f 1,3-bis(4-pyridyl)propane, 10g 4,4'-Bipyridylethylene, 10h 1,4-bis(4-pyridyl)benzene, 10i 1,4-bis(4-pyridyl)biphenyl et 10j 1,4-bis(4-pyridyl)ethylenebenzene. Ils ont été recueillis sous la forme de poudres polycrystallines avec des rendements respectifs de 74%, 83%, 47%, 43%, 60%, 49% et 49%. Le spectre infrarouge des composés 100d, 100e, 100f, 100g, 100h, 100i et 100j (polymères de coordination) présente une seule vibration associée à ν_{(CN)} observée respectivement à 2103, 2012, 2095, 2100, 2096, 2088 et 2098 cm⁻¹ et traduisant la réaction entre le précurseur 2 et les ligands connecteurs. La structure moléculaire de ces dérivés a pu être déterminée par diffraction des rayons X sur monocristaux révélant des structures polymériques unidimensionnelles analogues à celles rencontrées dans 100a, 100b et 100c. Dans ces composés, l'unité de répétition est basée sur un fragment bimétallique Cu₂(µ₂-dppm)₂, un ligand cyano et la moitié d'un ligand connecteur ditopique ainsi que d'un contre-anion PF₆⁻ et d'un nombre variable de molécules de solvant CH₂Cl₂ incluses. La structure étendue de ces composés est formée en connectant ces unités de répétition de telle sorte que se constitue un polymère unidimensionnel connectant des métallacycles tétramétalliques [Cu₄(µ₂-dppm)₄CN₂]²⁺ par des ligands connecteurs ditopiques. Les propriétés de luminescence à l'état solide de ces composés ont été étudiées. Tous ces composés à l'exception de 100j présentent sous excitation UV l'émission d'une lumière visible par l'oeil humain. Ces lumières émises sont associées à des spectres d'émissions présentant des bandes larges, éventuellement structurées et de profils variables en fonction de la température. Les maxima d'intensité mesurés à température ambiante sont notamment à 508 nm pour 100d, 488 nm pour 100f, 581 nm pour 100g 504 nm pour 100h et 515 nm pour 100i. Les rendements quantiques d'émission à l'état solide à température ambiante sont de 7 % nm pour 100d, 9 % pour 100f et 0,4% pour 100i. Le déplacement notable vers le rouge des spectres d'émission des dérivés 100a, 100b et 100c comparativement à celui du composé 2 se retrouve donc également dans ces nouveaux composés avec des amplitudes très variables en fonction de la nature chimique du ligand connecteur utilisé. De manière similaire à 100a, 100b et 100c, les nouveaux dérivés 100d, 100e, 100f, 100g, 100h, 100i et 100j présentent lorsque chauffés une transition thermique endothermique irréversible qui se fait sans dégradation thermique et se traduit par une transition des propriétés de luminescence du solide résultant par rapport au solide initial. Dans tous les cas, les solides résultants émettent à température ambiante une lumière perçue comme étant bleu. Il faut noter que la température à laquelle la transition s'opère est fonction de la nature du ligand connecteur utilisé avec une plage qui se situe entre 150 °C et 200°C pour les composés d'ores et déjà étudiés. Les études des spectres infra-rouge des composés obtenus après transition, comme dans le cas de ces obtenus après transition de 100a, 100b et 100c, suggèrent qu'une décoordination des ligands connecteurs s'opère lorsque la température critique de transition est atteinte.

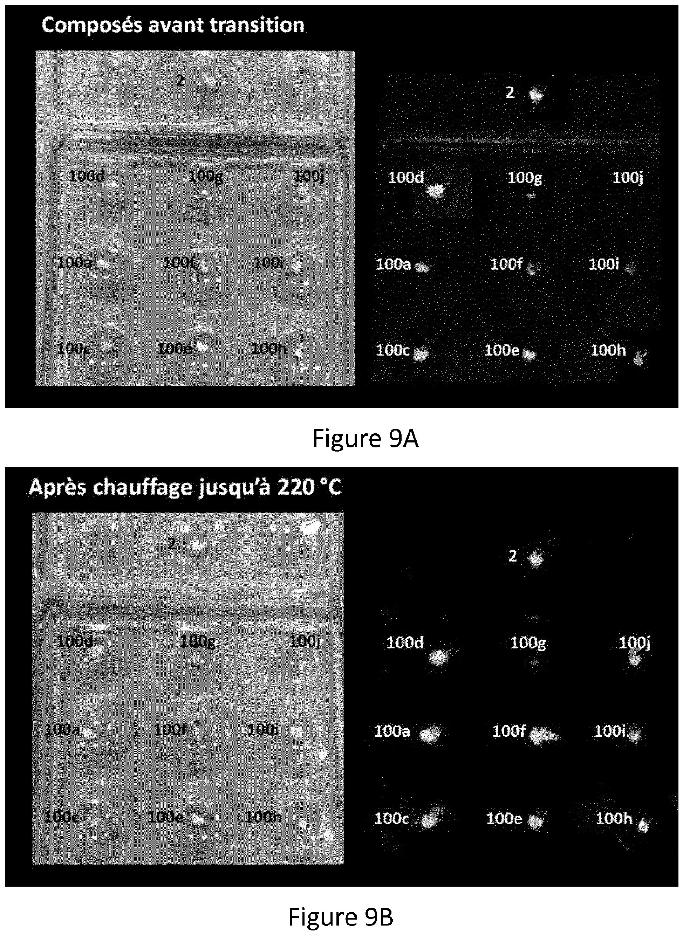

On présente désormais en lien avec les figures 9A et 9B les caractéristiques de luminescence à l'état solide, sous lumière visible (à gauche) et sous irradiation UV à 320 nm (à droite) de ces composés 100a, 100c, 100d, 100e, 100f, 100g, 100h, 100i et 100j. En lien avec la figure 9A, on peut constater qu'une famille de solides incolores ou légèrement jaunâtres (composé 100c et 100j) peut être ainsi obtenue à partir du précurseur 2 qui est lui-même incolore. Par contre, sous irradiation UV, ces solides émettent des lumières dont la couleur perçue par l'oeil va du bleu profond pour le précurseur 2 au bleu cyan pour les composés 100d, 100a, 100f et 100e, au vert pour les composés 100i et 100h, au jaune pour le composé 100c et au rouge pour le composé 100g, alors que 100j n'est pas luminescent.

Après traitement thermique à 220 °C, les composés de la figure 9A sont présentés dans la photographie de la figure 9B. On peut y constater que ce traitement thermique ne change pas particulièrement leur aspect sous lumière visible. Par contre, sous irradiation UV à 320 nm, tous ces composés émettent maintenant une lumière de couleur bleutée, à l'exception du composé 100g. Celui-ci présente en effet toujours une lumière de couleur rouge et transite vers l'émission d'une lumière bleu à une température plus élevée, de l'ordre de 230 °C.

## Revendications

1. Polymère de coordination d'un précurseur à base d'ions Cu(I) avec un ligand connecteur polytopique,
ledit précurseur étant un complexe luminescent comprenant au moins deux ions Cu(I), lesdits deux ions Cu(I) du précurseur étant reliés entre eux par au moins un ligand assembleur; et,
ledit ligand connecteur possédant au moins deux groupements terminaux choisis indépendamment parmi un groupe aromatique azoté et un groupe carbonitrile;
ledit polymère de coordination présentant une transition thermochrome irréversible de sa luminescence lorsqu'il est soumis à une température dépassant une température critique T_{c}.

2. Polymère de coordination selon la revendication 1, dans lequel le ligand connecteur est un ligand ditopique ou tritopique.

3. Polymère de coordination selon l'une quelconque des revendications précédentes, dans lequel lesdits au moins deux groupements terminaux dudit ligand connecteur sont choisis indépendamment parmi : 4-pyridil, 3-pyridyl, imidazoyle, pyrimidyl, thioazolyl, nitrile, 4-benzonitrile et 3-benzonitrile.

4. Polymère de coordination selon la revendication 3, ledit ligand connecteur étant choisi parmi les composés suivants, dans lesquels Coord₁ et Coord₂ sont lesdits au moins deux groupements terminaux, de formule: 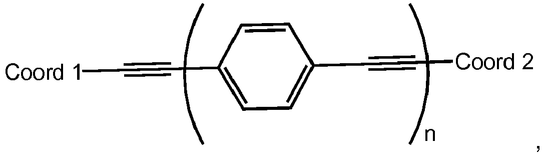 dans laquelle n est un entier allant de 0 à 2 ; 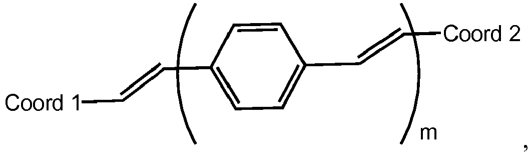 dans laquelle m est un entier allant de 0 à 3 ; 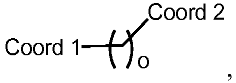 dans laquelle o est un entier allant de 0 à 12 ; 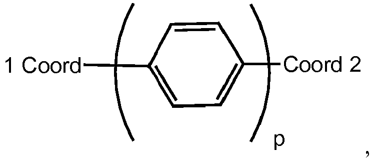 dans laquelle p est un entier allant de 1 à 3 ; 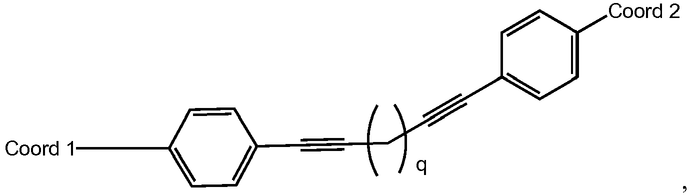 dans laquelle q est un entier allant de 0 à 6; et,

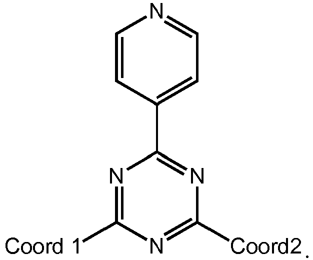

5. Polymère de coordination selon la revendication 4, dans lequel lesdits au moins deux groupements terminaux dudit ligand connecteur sont du 4-pyridil, ledit ligand assembleur étant choisi parmi les composés suivants, de formule : 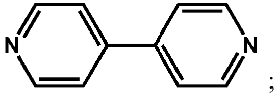 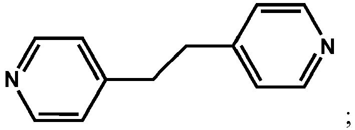 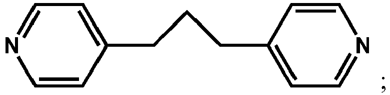 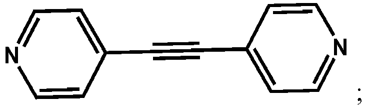 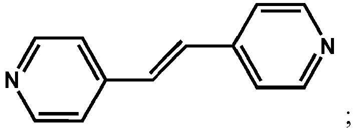 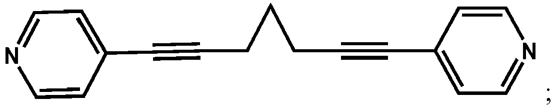 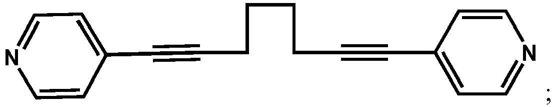 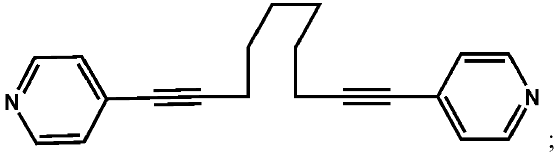 et, 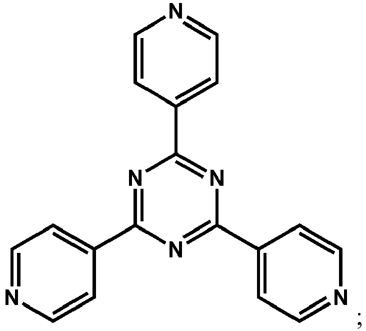 ou lesdits au moins deux groupements terminaux dudit ligand connecteur sont du 4-benzonitrile, ledit ligand assembleur étant choisi parmi les composés suivants, de formule : 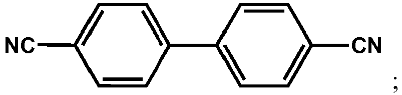 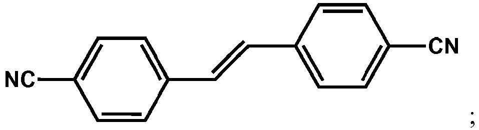 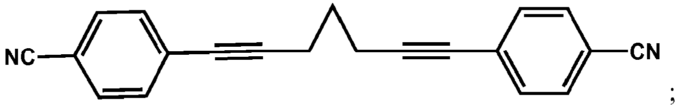 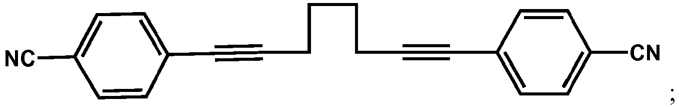 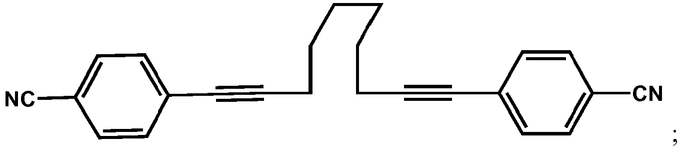 et,

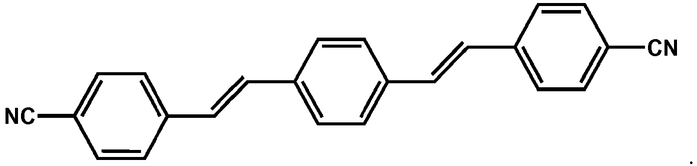

6. Polymère de coordination selon l'une quelconque des revendications précédentes, dans lequel ledit précurseur comprend de 2 à 12 ions Cu(I), préférentiellement de 2 à 8 ions Cu(I) et très préférentiellement de 2 à 4 ions Cu(I).

7. Polymère de coordination selon la revendication 6, dans lequel ledit précurseur est un métallacycle d'ions Cu(I) tétramétallique de formule : 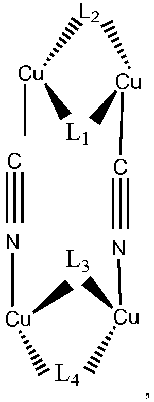 dans laquelle L₁, L₂, L₃ et L₄ sont ledit au moins un ligand assembleur.

8. Polymère de coordination selon l'une quelconque des revendications 6 à 7, dans lequel lesdits au moins deux ions Cu(I) du précurseur sont distants l'un de l'autre de 2,4 à 4Â.

9. Polymère de coordination selon l'une quelconque des revendications précédentes, dans lequel ledit ligand assembleur comprend au moins deux groupements choisis indépendamment parmi un atome de carbone carbénique et un groupe organophosphoré.

10. Polymère de coordination selon la revendication 9, dans lequel ledit ligand assembleur comprend au moins deux groupements deux groupes diphenylphosphino.

11. Polymère de coordination selon la revendication 10, dans lequel ledit ligand assembleur est choisi parmi les composés de formule : 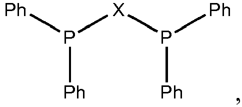 dans laquelle X est : CH₂, (CH₂)₂ ou NH ; 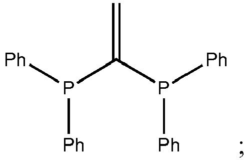 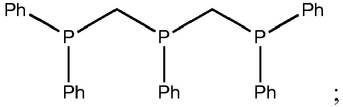 et,

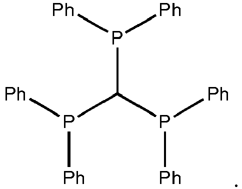

12. Polymère de coordination selon l'une quelconque des revendications précédentes, dans lequel ladite température critique est d'au moins 100°C, préférentiellement comprise entre 120°C et 200°C, et très préférentiellement comprise entre 170°C et 190°C.

13. Procédé de fabrication d'un polymère de coordination selon l'une quelconque des revendications 1 à 12, dans lequel ledit précurseur et ledit ligand connecteur sont mis à réagir à une température strictement inférieure à la température critique T_{c} pour former des cristaux dudit polymère de coordination.

14. Utilisation d'un polymère de coordination selon l'une quelconque des revendications 1 à 12, pour contrôler que la température d'un milieu ne dépasse pas ladite température critique au cours du temps.

## Patentansprüche

1. Koordinationspolymer einer Vorstufe auf der Grundlage von Cu(I)-Ionen mit einem polytopen Verbindungsliganden,
wobei es sich bei der Vorstufe um einen lumineszierenden Komplex handelt, der mindestens zwei Cu(I)-Ionen umfasst, die zwei Cu(I)-Ionen der Vorstufe durch mindestens einen zusammenlagernden Liganden miteinander verbunden sind und der Verbindungsligand mindestens zwei Endgruppen aufweist, die unabhängig aus einer stickstoffhaltigen aromatischen Gruppe und einer Carbonitrilgruppe ausgewählt sind;
wobei das Koordinationspolymer einen irreversiblen thermochromen Lumineszenzübergang aufweist, wenn eine Temperatur darauf einwirken gelassen wird, die eine kritische Temperatur T_{c} übersteigt.

2. Koordinationspolymer nach Anspruch 1, wobei es sich bei dem Verbindungsliganden um einen ditopischen oder tritopischen Liganden handelt.

3. Koordinationspolymer nach einem der vorhergehenden Ansprüche, wobei die mindestens zwei Endgruppen des Verbindungsliganden aus: 4-Pyridyl, 3-Pyridyl, Imidazoyl, Pyrimidyl, Thioazolyl, Nitril, 4-Benzonitril und 3-Benzonitril unabhängig ausgewählt sind.

4. Koordinationspolymer nach Anspruch 3, wobei der Verbindungsligand aus den folgenden Verbindungen, in denen Coord₁ und Coord2 die mindestens zwei Endgruppen sind, mit der Formel: 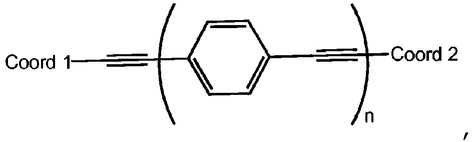 wobei n eine ganze Zahl von 0 bis 2 ist; 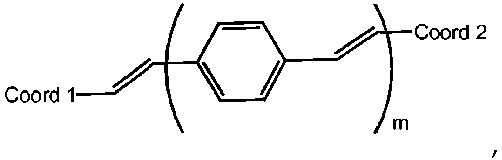 wobei m eine ganze Zahl von 0 bis 3 ist; 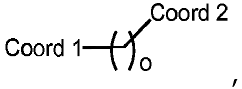 wobei o eine ganze Zahl von 0 bis 12 ist; 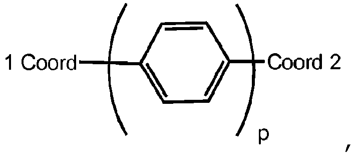 wobei p eine ganze Zahl von 1 bis 3 ist; 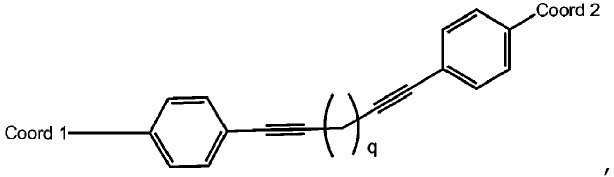 wobei q eine ganze Zahl von 0 bis 6 ist; und 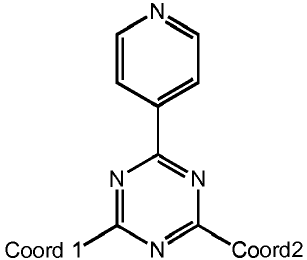 ausgewählt ist.

5. Koordinationspolymer nach Anspruch 4, wobei die mindestens zwei Endgruppen des Verbindungsliganden 4-Pyridyl sind, wobei der zusammenlagernde Ligand aus den folgenden Verbindungen der Formel: 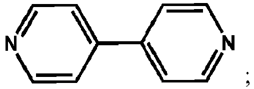 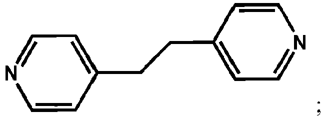 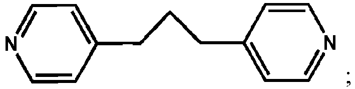 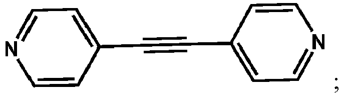 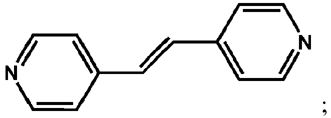 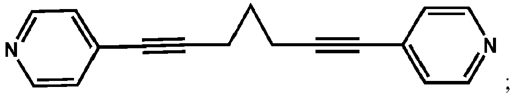 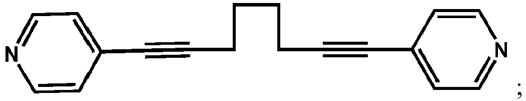 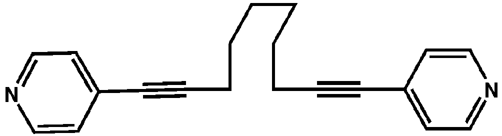 und 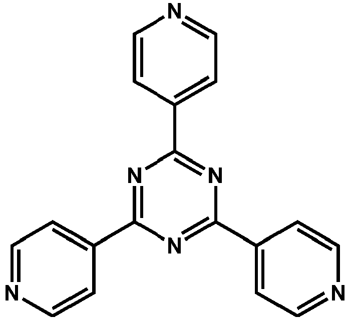 ausgewählt ist, wobei die mindestens zwei Endgruppen des Verbindungsliganden 4-Benzonitril sind, wobei der zusammenlagernde Ligand aus den folgenden Verbindungen der Formel: 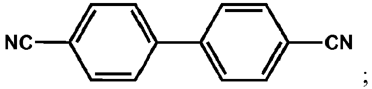 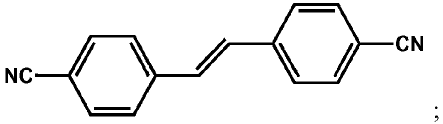 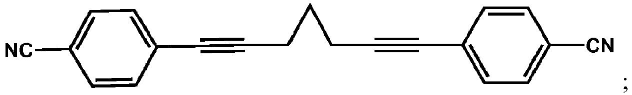 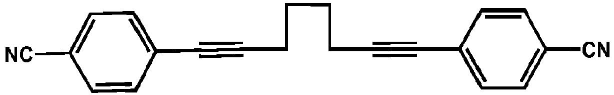 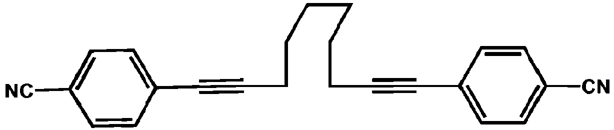 und 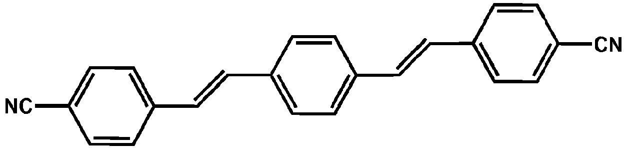 ausgewählt ist.

6. Koordinationspolymer nach einem der vorhergehenden Ansprüche, wobei die Vorstufe 2 bis 12 Cu(I)-Ionen, vorzugsweise 2 bis 8 Cu(I)-Ionen und besonders bevorzugt 2 bis 4 Cu(I)-Ionen umfasst.

7. Koordinationspolymer nach Anspruch 6, wobei es sich bei der Vorstufe um einen tetrametallischen Metallazyklus von Cu(I)-Ionen der Formel: 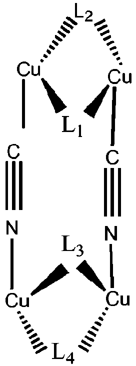 handelt, wobei L₁, L₂, L₃ et L₄ der mindestens eine zusammenlagernde Ligand sind.

8. Koordinationspolymer nach einem der Ansprüche 6 bis 7, wobei die mindestens zwei Cu(I)-Ionen der Vorstufe um 2,4 bis 4 Å voneinander beabstandet sind.

9. Koordinationspolymer nach einem der vorhergehenden Ansprüche, wobei der zusammenlagernde Ligand mindestens zwei Gruppen umfasst, die aus einem Carben-Kohlenstoffatom und einer Organophosphorgruppe unabhängig ausgewählt sind.

10. Koordinationspolymer nach Anspruch 9, wobei der zusammenlagernde Ligand mindestens zwei Gruppen von zwei Diphenylphosphinogruppen umfasst.

11. Koordinationspolymer nach Anspruch 10, wobei der zusammenlagernde Ligand aus Verbindungen der Formel: 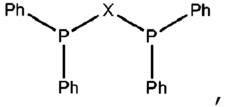 wobei X: CH₂, (CH₂)₂ oder NH ist; 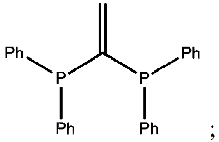 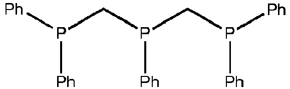 und 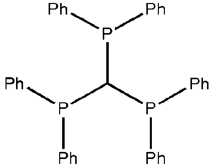 ausgewählt ist.

12. Koordinationspolymer nach einem der vorhergehenden Ansprüche, wobei die kritische Temperatur mindestens 100 °C, vorzugsweise zwischen 120 °C und 200 °C und besonders bevorzugt zwischen 170 °C und 190 °C beträgt.

13. Verfahren zur Herstellung eines Koordinationspolymers nach einem der Ansprüche 1 bis 12, wobei die Vorstufe und der Verbindungsligand bei einer Temperatur strikt unterhalb der kritischen Temperatur T_{c} umgesetzt werden, wodurch Kristalle des Koordinationspolymers gebildet werden.

14. Verwendung eines Koordinationspolymers nach einem der Ansprüche 1 bis 12 zur Steuerung, dass die Temperatur eines Mediums im Zeitverlauf nicht die kritische Temperatur übersteigt.

## Claims

1. A coordination polymer for a Cu(I) ion-based precursor with a polytopic connecting ligand,
said precursor being a luminescent complex comprising at least two Cu(I) ions, said two Cu(I) ions of the precursor being bound together by at least one assembling ligand; and, said connecting ligand having at least two terminal groups independently selected from a nitrogen aromatic group and a carbonitrile group;
said coordination polymer having an irreversible thermochromic transition of its luminescence when subjected to a temperature exceeding a critical temperature T_{c}.

2. The coordination polymer according to claim 1, wherein the connecting ligand is a ditopic or tritopic ligand.

3. The coordination polymer according to any one of the preceding claims, wherein said at least two terminal groups of said connecting ligand are independently selected from: 4-pyridil, 3-pyridyl, imidazoyl, pyrimidyl, thioazolyl, nitrile, 4-benzonitrile and 3-benzonitrile.

4. The coordination polymer according to claim 3, said connecting ligand being selected from the following compounds, wherein Coord₁ and Coord₂ are said at least two terminal groups, of formula: 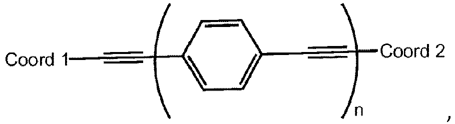 wherein n is an integer ranging from 0 to 2; 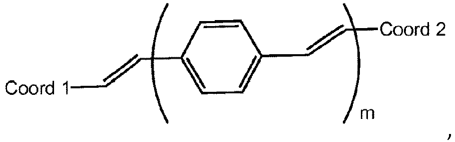 wherein m is an integer ranging from 0 to 3; 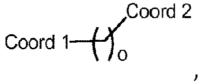 wherein o is an integer ranging from 0 to 12; 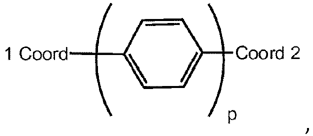 wherein p is an integer ranging from 1 to 3; 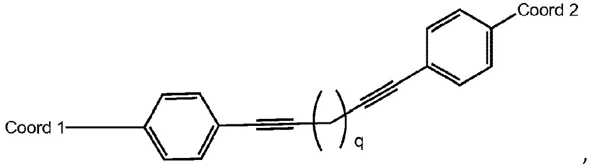 wherein q is an integer ranging from 0 to 6; and,

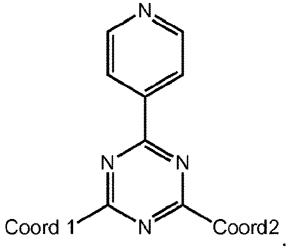

5. The coordination polymer according to claim 4, wherein said at least two terminal groups of said connecting ligand are 4-pyridil, said assembling ligand being selected from the following compounds, of formula: 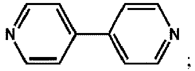 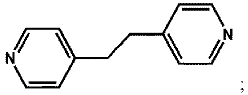 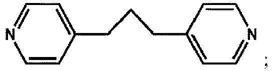 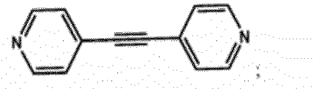 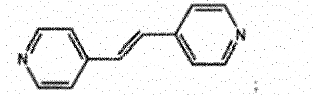 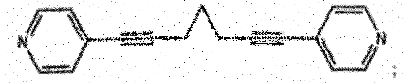 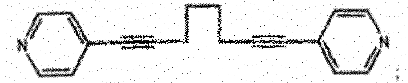 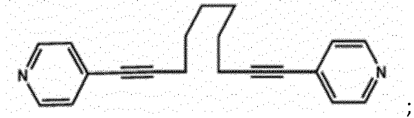 and, 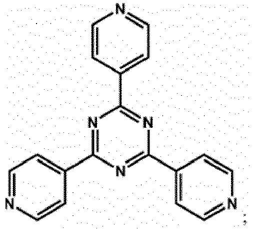 or said at least two terminal groups of said connecting ligand are 4-benzonitrile, said assembling ligand being selected from the following compounds, of formula: 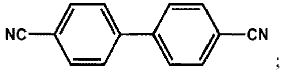 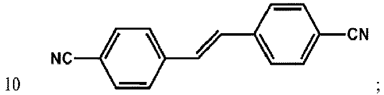 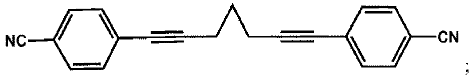 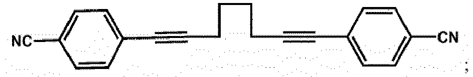 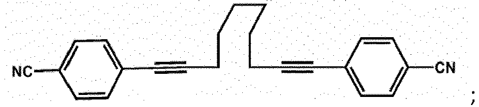 and,

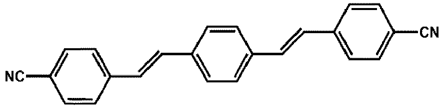

6. The coordination polymer according to any one of the preceding claims, wherein said precursor comprises from 2 to 12 Cu(I) ions, preferably from 2 to 8 Cu(I) ions and very preferably from 2 to 4 Cu(I) ions.

7. The coordination polymer according to claim 6, wherein said precursor is a tetrametallic metallacycle of Cu(I) ions of formula: 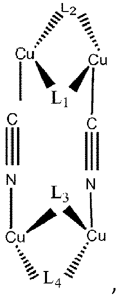 wherein L₁, L₂, L₃ and L₄ are said at least one assembling ligand.

8. The coordination polymer according to any one of claims 6 to 7, wherein said at least two Cu(I) ions of the precursor are distant from each other by 2.4 to 4 Å.

9. The coordination polymer according to any one of the preceding claims, wherein said assembling ligand comprises at least two groups independently selected from a carbenic carbon atom and an organophosphorus group.

10. The coordination polymer according to claim 9, wherein said assembling ligand comprises at least two diphenylphosphino groups.

11. The coordination polymer according to claim 10, wherein said assembling ligand is selected from the compounds of formula: 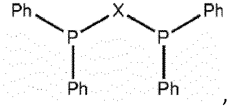 wherein X is: CH₂, (CH₂)₂ or NH; 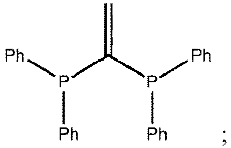 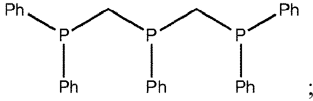 and,

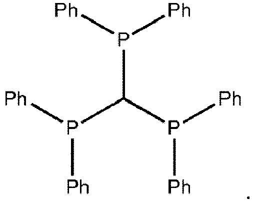

12. The coordination polymer according to any one of the preceding claims, wherein said critical temperature is at least 100°C, preferably comprised between 120°C and 200°C, and very preferably comprised between 170°C and 190°C.

13. A method for manufacturing a coordination polymer according to any one of claims 1 to 12, wherein said precursor and said connecting ligand are reacted at a temperature strictly below the critical temperature T_{c} to form crystals of said coordination polymer.

14. A use of a coordination polymer according to any one of claims 1 to 12, for controlling that the temperature of a medium does not exceed said critical temperature over time.
